# EUROPEAN PATENT APPLICATION

(11) **EP 1 452 951 A1**
(43) Date of publication of application: **01.09.2004**
(21) Application number: 03425127.2
(22) Date of filing: 28.02.2003
(51) Int. Cl.: G06F 3/023, H04M 1/2745

(54) **A system for text input in reduced keyboard terminals**

(71) Applicant: Siemens Mobile Communications S.p.A., 20126 Milano (IT)
(72) Inventor: Meago, Francesco, 23100 Sondrio (IT)

(57) **Abstract**

A mobile communication terminal (1) with a reduced keyboard offers the user a text composition facility (8) including a text disambiguating system (8a), and a directory facility (9). The terminal (1) further includes means (11) for establishing a link between the text composition facility (8) and the directory facility (9) at least when the user is writing a new record into the directory.

According to a preferred embodimento of the invention, said linking means (11) being arranged to automatically start a parsing of that record to identify words or word portions in the different record fields; to look, whenever a word or word portion is identified, at the first memory area (8b) to check whether the word or word portion is already included in the vocabulary modules; and, in the negative, to add at least some of the newly identified words or word portions to the vocabulary.

## Description

### FIELD OF THE INVENTION

The present invention relates to terminals allowing text input through a reduced keyboard, such as mobile communications terminals, and more particularly it refers to a terminal with an improved text input system and to a method of text input in such a terminal.

### BACKGROUND OF THE INVENTION

Current mobile telecommunication systems (GSM and upcoming UMTS) include mobile phones and terminals (MT) with an embedded software whose purpose is to provide the user with powerful and easy-to-use functions. Among the functions currently supported by most MTs, message composition (or generally text composition) and address book (or telephone directory) facilities are of interest for the present invention. The text composition and the address book/telephone directory facilities will be hereinafter simply referred to as "messaging" and "directory" facilities, respectively.

In such terminals, the keyboard is a reduced keyboard, largely similar to the keyboard of the conventional push-button telephones used with fixed networks, and buttons used for dialling are also to be used for typing the characters of a text (be it a message or a name to be entered into the directory). Each button is therefore associated with multiple characters so that, when using the keyboard as an alphabetic keyboard, the problem of eliminating the ambiguity in the input (i.e. of recognising the desired character) exists.

The choice of one character on a multiple-character button when typing a text may be effected by operating the button a different number of times. For example, in case of a button associated with characters "a b c", operating the button once will result in entering character "a", while operating the button twice or thrice will result in entering character "b" or "c", respectively. This multiple-stroke technique is currently adopted when entering records in the directory, since the alphabetic portion of the record generally has a limited number of characters, but clearly it would be rather annoying when a text is to be typed. (We recall that third-generation terminals will include also portable computers, so that a text to be inputted could be not only a short message, but also a relatively long text.)

To make text input more user friendly, current mobile phones already include a text disambiguating system that is actuated in the messaging facility. A text disambiguating system commonly used in mobile phones is known under the name T9® (registered trademark of Tegic Communications, Inc., of Seattle, Wa., USA), and is disclosed e.g. in EP-B 0 842 463, EP-B 1 010 057 and EP-B 1 018 06. That system allows the user to write a text in a given language by typing only once the multiple choice buttons ("ambiguous spelling method"). The system receives thus a "list of selected buttons", looks in a vocabulary for the possible word(s) that, in the chosen language, correspond(s) to the "list of selected buttons" and displays such word(s) to the user. If necessary, the user selects the appropriate word by a selection button. Thus, the basic idea behind the T9 function is to allow the user to write a word as a list of buttons (plus a possible selection among multiple words) instead of using a list of characters by pressing the same button one or several times (unambiguous spelling method).

A limitation in the known disambiguating systems is that they operate in connection with the messaging facility only and fail to establish a link with the directory facility. Thus, when the user includes a person name or another proper noun into a message, often the system does not find any matching item in the vocabulary, even if the name or noun is present in the directory. Therefore the user is compelled to enter again that name or noun by using the unambiguous spelling method. That operation is then to be repeated also for the directory, should the name or noun be missing there and should the user wish to include it into the directory.

EP-B 0 842 463 and EP-B 1 010 057 mention the possibility for the system to update the vocabulary by adding words entered in a text through the unambiguous spelling method, so that, when the word is entered in a subsequent message through the ambiguous spelling method, such word can be displayed to the user for selection. This solution is embodied in some mobile phones. Yet, this does not solve the problem of the link between the messaging and the directory facilities.

In addition to adding words to the vocabulary during normal text input, both documents also mention the possibility of downloading documents into the disambiguating system and parsing them to identify and add proper nouns and other words to the vocabulary. Thus, the contents e.g. of an external directory can be included in the vocabulary, but this is an off-line operation, that does not create the link between the messaging and directory facilities within a same terminal.

### SUMMARY OF THE INVENTION

Thus, it is an object to the invention to provide a reduced-keyboard terminal having messaging and directory facilities, in which a cooperation between the two facilities during text input is provided.

A terminal according to the invention has a processing unit with an operating system offering a user a text composition facility and a telephone directory/address book facility, and has input means operable for entering text characters and such that a same input means is operable to enter different characters. The text composition facility includes a text disambiguating system accessing a first memory area of the terminal storing vocabulary modules, and the telephone directory/address book facility gives access to a second memory area of the terminal storing a plurality of records each comprising a plurality of fields. According to the invention, the terminal further includes means for establishing a link between the text composition facility and the telephone directory/address book facility at least when the user is writing a new record into said second memory area, said linking means being arranged to automatically start a parsing of that record to identify words or word portions in the different record fields; to look, whenever a word or word portion is identified, at the first memory area to check whether the word or word portion is already included in the vocabulary modules; and, in the negative, to add at least some of the newly identified words or word portions to the vocabulary.

It is another object of the invention to provide a method of text input for a reduced-keyboard terminal offering a user a text composition facility and a telephone directory/address book facility.

The method of text input according to the invention comprises establishing a link between the text composition facility and the telephone directory/address book facility at least whenever a new record is being entered into the directory/address book, the link establishment comprising the steps of:
- automatically starting a parsing of that record to identify words or word portions in the different record fields;
- looking, whenever a word or word portion is identified, at the vocabulary modules of the disambiguating system to check whether the word or word portion is already included in said vocabulary modules; and, in the negative,
- adding at least some of the newly identified word or word portion to the vocabulary.

### BRIEF DESCRIPTION OF THE DRAWINGS

The features and the advantages of the invention will become more apparent from the following description of a preferred exemplary embodiment, taken in conjunction with the accompanying drawings, in which:
- Fig. 1 is a simplified block diagram of the logical organisation of a terminal according to the present invention;
- Fig, 2 is a flow chart of the method steps when the method is started by entering a record into the directory; and
- Fig. 3 is a flow chart of the method steps when the method is started by typing a message.

### DESCRIPTION OF THE PREFERRED EMBODIMENT

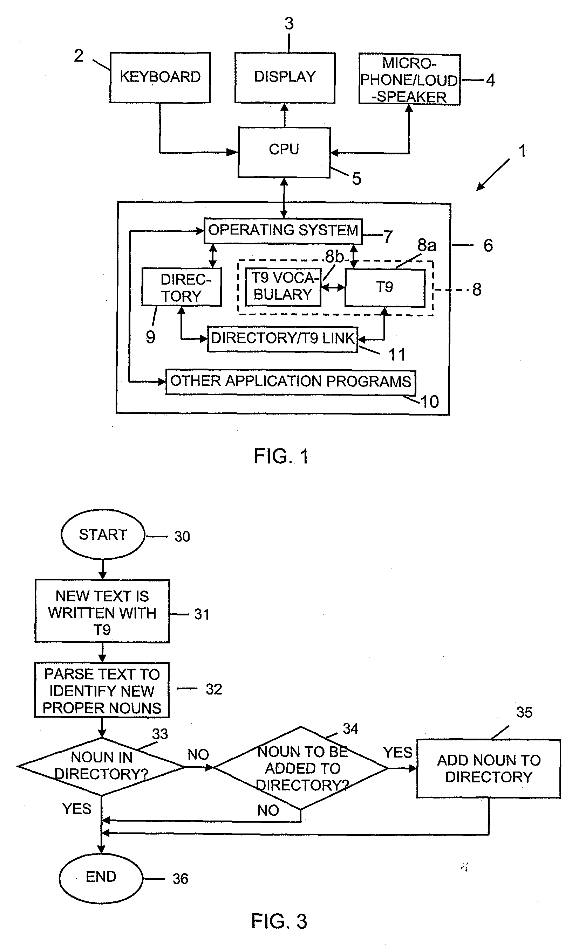

Referring to Fig. 1, a terminal 1 according to the invention, such as a mobile phone or other mobile communication terminal, includes a keyboard 2, a display 3 and possibly a microphone/loudspeaker 4.

As in any conventional mobile terminal, keyboard 2 is a reduced keyboard, comprising e.g. an array of 3x4 buttons arranged like in a fixed push-button telephone, plus some further function buttons. At least a number of the buttons in the array serve for both dialling and typing characters, e. g. alpha-numeric characters or other characters: thus, each of said buttons is associated with a plurality of characters.

Keyboard 2, display 3 and microphone/loudspeaker 4 are connected with a processing unit (CPU) 5, which in turn is associated with a memory 6. Memory 6 stores the whole of the software necessary for the general operation of the terminal (operating system 7) as well as a number of application programs which are accessed by the user through keyboard 2, CPU 5 and operating system 7.

The application programs depend on the kind of terminal and on the user's choices. As far as the invention is concerned, they must include programs making available to the user:
- a messaging facility 8, which, depending on the kind of terminal, might allow the user to write only short messages or might be a more complete word editor;
- a directory 9, for containing names, telephone numbers and/or addresses.

The remaining application programs that are not concerned by the invention are generally denoted 10.

Messaging facility 8 includes a text disambiguating system 8a, allowing the user to input a text as a "list of buttons" (i.e. by pressing only once a button in keyboard 2 for any given character, even if that button is associated with multiple characters), and vocabulary modules 8b (e.g. a module for each language admitted by the terminal, a module for proper nouns etc.). By way of example, it is assumed that text disambiguating system 8a is the T9® system mentioned above.

Directory 9 on the contrary usually requires that any text be entered through the unambiguous spelling method (i.e. through multiple operations of the buttons in keyboard 2).

According to the invention, terminal 1 also includes means 11 automatically establishing a link between text-composition facility 8 and directory 9 at least when a record is entered into directory 9 and, possibly, also when a text is entered by using the messaging facility. Linking means 11 will generally be implemented through a program stored in memory 6. Since linking means 11 are actuated when the user is acting on the directory and/or the messaging facility, block 11 is shown as being connected to blocks 8a and 9.

When program 11 is actuated from the directory, its basic task is to recognise whether any word contained in record being entered (e. g. names, nicknames...) is already present in T9 vocabulary 8b and, in the negative, to transfer that word to vocabulary 8b, possibly after some supplementary check that will be disclosed hereinafter.

Thus, a user accessing the messaging facility can write as a list of buttons, from that moment on, also words that, without the linking program 11, would be unknown to disambiguating system 8a since they are present only in the directory.

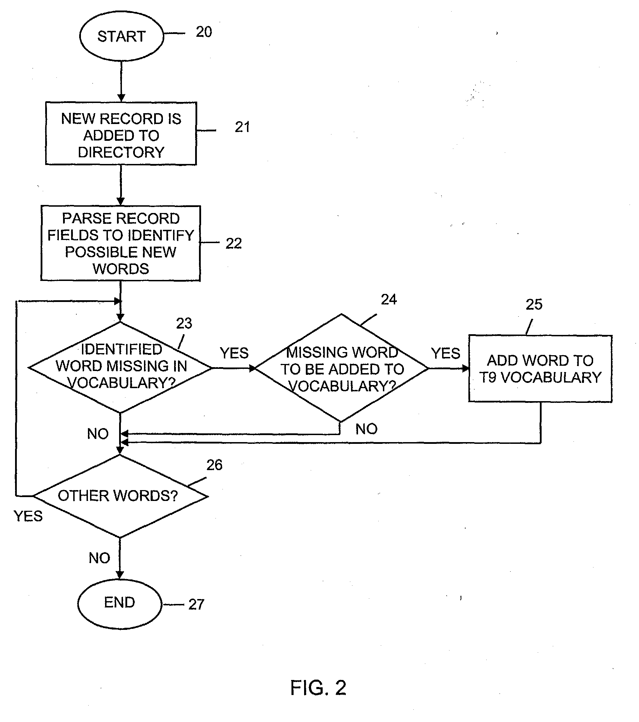

The text-input method implemented in terminal 1 under such conditions is disclosed in the flow chart of Fig. 2.

After the start 20 (corresponding e.g. to the access to directory 9), the first step 21 is entering a new record into directory 9. Records belonging to the directory include different record fields: a name, a phone number and maybe additional fields, e. g. an address. The name field as well as any additional record field might contain a number of words (thinking of a word as a continuous sequence of characters without spaces).

At step 22 the fields of the new record are parsed in order to identify the different words in each field. The existence of every identified word in the T9 vocabulary at step 23 is checked. In case an identified word is missing in the vocabulary, two solutions can be envisaged:
- the program carries out a check, at step 24, on whether the word is to be added to the vocabulary (see below): in the affirmative the new word is added at step 25; in the negative the next word or the next field, if any, is considered at step 26;
- any word missing in the vocabulary is automatically added to the vocabulary itself; thereafter the program passes to the next word/field as before.

The parsing, checking and adding steps may take place while the record is being added to the directory.

After processing the last word in the last field, the operation of linking program 11 for that record stops at 27, and will be automatically resumed when another record is to be entered.

Some considerations about the parsing and the addition of new words to the vocabulary are useful.

As stated before, a record in the directory includes words or word portions of different kinds. Some of the words might be names, surnames or nicknames of people. The name field could contain, besides the actual name(s), further characters, e.g. in order to distinguish among different contact possibilities for the same person or among homonymous people. For instance, "Anja c" might indicate that the entry refers to Anja's cellular phone ("c" stands for "cellular"), while "Anja h" might indicate Anja's fixed phone ("h" stands for "home"). "Anja FI" might indicate that the entry refers to Anja from Finland, while "Anja NL" might indicate Anja from Netherlands. Some words might be related with an address (e.g. "Milano") or might be abbreviations (e.g. "hairdr" for "hairdresser"), and also such words could be of interest for the T9 during message input. In this respect, it is noted that the T9 is arranged to recognise not only complete words, but also word stems.

Given the very different nature of such words, when implementing the program, the technician could address the question of whether all words identified and missing in the vocabulary are worth to be added to the vocabulary (i.e. the program directly passes from step 23 to step 25), or rather some words are worth to be recorded, while some others are not vocabulary (i.e. the program directly passes from step 23 to step 25 through step 24). With reference to the example above, only "Anja" could be of interest,

In such case, a first solution could be considering for introduction into the vocabulary only words that exceed a minimum number of letters (e.g. 1, 2 or 3). The words passing the check are e. g. automatically added, those below the threshold can be discarded, either automatically or, preferably, upon command by the user through the selection button (indeed, a short word could even be an abbreviation used also in messages). However, this check on the length might be unnecessary because:
a) no problem of memory capacity should exist in including all the words in the vocabulary (generally, the directory of a mobile terminal is rather limited),
b) no problem should exist for the user as to user friendliness, because the disambiguating program presents the different words to the user in order of frequency of use, so that "strange" words often are the last to be shown.

Another possibility of implementing step 24 could be always asking the user whether he/she would like to introduce this new word in the vocabulary, even when the check on the length is passed. The user could answer by selecting "yes" or "no". Also this mechanism however is probably unnecessary because of reasons a) and b) above.

The program could also take into account that some words may be a mix of different things: for example, instead of "Anja c" one could write "AnjaC" or "ANJAC" to indicate Anja's cellular phone, and this would presumably not be of interest for the T9 during message input, since the user will type only "Anja". Anyway, even if this further word is added to the dictionary, this should not be a problem because of reasons a) and b). To avoid the "noise" represented by such words, the user should learn to separate the two words by using a space, so that the T9 can distinguish between them. Of course, the alternative can always be asking the user a confirmation before adding the new word, even if this has the drawback of requiring additional explicit man-machine interaction.

Still a further idea could be using capitalisation instead of a blank space for identifying different words in the record field. For example, some users use "NameSurname" without the space between name and surname. In other words, if an upper-case (capital) letter follows a lower-case letter, the capital letter should be understood as the beginning of a new word. After separation of the individual words, the program proceeds as disclosed above.

The text fields in the directory (name, address...) often include characters other than letters: punctuation, special characters like " ' " (apostrophe), "." (stop), "-", "&", and numbers. Some of these characters may frequently occur in some languages (e.g. the apostrophe in Italian or French) or may be commonly used in the record fields: therefore they should be considered by the parsing algorithm while searching for new words. For example:
- "D'Onofrio", "D'Alembert", "D&G", "Jean-Michel" or "M.Rossi" are composite names formed by two words separated by the special character. In certain instances, both the composite name and all component words could be considered for addition to the vocabulary (e.g., Jean, Michel and Jean-Michel"); in other instances, only the composite name (D&G) or both the composite name and one component only (D'Onofrio, Onofrio) are of interest;
- "Mark R." is giving indication about Mark's surname ("R."). In this case the "." should not be considered as being a word of interest.
- "John2" could be used for indicating a second entry for the same person, while other names like "H3G" contain letters and numbers but are one word. Based on common use, another kind of check could be not to consider the number if it appears in the end of a word (in the example only "John" would be considered as a word), but consider the number if it appears in the middle of a word (in the example "H3G" would be considered as a word).

In all such cases, asking confirmation to the user before adding the composite word and any of the components thereof to the vocabulary could avoid storing a lot of noise, especially if some of the components appear rather frequently.

It has been mentioned that it is also possible to establish a link between the T9 and the directory while the user is using the messaging facility. This eliminates the need for the user to write again into the directory a name that has been first entered into a message.

This is shown in Fig. 3. Here start 30 is the access to messaging facility to write a new text (step 31). Then, when the T9 detects a proper noun in the text (step 32), will check whether it is already present in the directory (step 33) and, in the negative, will inform the user and, possibly ask him/her whether he wants to introduce that noun in the directory (step 34). The problem could be that, when writing a message, the user could not have at hands the details of his/her correspondent, so that even if he/she decides to supplement the directory (step 35), he/she could have to complete the record later. The program ends when the user leaves the messaging facility. For sake of simplicity, the cycle through successive nouns is not shown.

Also in such case the parsing, checking and adding steps may take place while the text is being written.

The described operations require of course that the T9 has a vocabulary module devoted to proper nouns for each of the languages admitted. The possibility of having such a module in disclosed in the above mentioned documents. Of course, the T9 will also update, when necessary, its proper noun module.

It is evident that what disclosed above has been given only by way of non limiting example, and that changes and modifications can be performed without departing from the scope of the invention. For instance, even if a keyboard has been mentioned in the description, the terminal could include any other device for inputting characters, in which a same input means is operable to introduce a number of different characters.

## Claims

1. A terminal having:
- a processing unit (5) with an operating system (6) offering a user a text composition facility (8) and a telephone directory/address book facility (9), the text composition facility (8) including a text disambiguating system (8a) accessing a first memory area (8b) of the terminal storing vocabulary modules, and the telephone directory/address book facility (9) giving access to a second memory area of the terminal (1) storing a plurality of records each comprising a plurality of fields, and
- input means (2) operable for entering text characters and such that a same input means is operable to enter different characters,
**characterised in that** the terminal (1) further includes means (11) for establishing a link between the text composition facility (8) and the telephone directory/address book facility (9) at least when the user writes a new record into the second memory area, said linking means (11) being arranged to automatically start a parsing of that record to identify words or word portions in the different record fields; to look, whenever a word or word portion is identified, at the first memory area (8b) to check whether the word or word portion is already included in the vocabulary modules; and, in the negative, to add at least some of the newly identified words or word portions to the vocabulary.

2. A terminal according to claim 1, wherein said linking means (11) are arranged to automatically add any newly identified word or word portion to the vocabulary.

3. A terminal according to claim 1, wherein said linking means (11) are arranged to check, before adding a newly identified word or word portion to the vocabulary, whether said word or word portion meets predetermined criteria.

4. A terminal according to claim 3, wherein said linking means (11) are arranged to automatically add any newly identified word or word portion meeting said predetermined criteria to the vocabulary.

5. A terminal according to claim 3 or 4, wherein said linking means (11) are arranged to discard any newly identified word or word portion not meeting said predetermined criteria upon command of the user,.

6. A terminal according to claim 1 or 3, wherein said linking means (11) are arranged to add a newly identified word or word portion, or a newly identified word or word portion meeting said predetermined criteria, to the vocabulary upon command of the user.

7. A terminal according to any preceding claim, wherein said first memory area (8a) stores vocabulary modules devoted to proper nouns, and said linking means (11) are also arranged, whenever a proper noun is entered into a text when using the text composition facility, to look at the second memory area to check whether the noun is already included in the address book/telephone directory; and, in the negative, to inform the user of this.

8. A terminal according to any preceding claim, wherein said terminal (1) is a mobile communication terminal.

9. A method of text input in a terminal (1) offering a user a text composition facility (8) and a telephone directory/address book facility (9), wherein the text composition facility (8) includes a text disambiguating system (8a) associated with vocabulary modules, and the telephone directory/address book facility (9) allows storing a plurality of records each comprising a plurality of fields, and wherein the user enters text characters through input means (2) such that a same input means is operable to enter a plurality of characters, **characterised in that** the method comprises establishing a link between the text composition facility (8) and the telephone directory/address book facility (9) at least whenever a new record is entered into the directory/address book, the link establishment comprising the steps of:
- automatically starting a parsing of that record to identify words or word portions in the different record fields;
- looking, whenever a word or word portion is identified, at the vocabulary modules of the disambiguating system (8a) to check whether the word or word portion is already included in said vocabulary modules; and, in the negative,
- adding at least some of the newly identified words or word portions to the vocabulary.

10. A method according to claim 9, wherein said adding step is enabled when the newly identified word or word portion meets predetermined criteria.

11. A method according to claim 10, wherein said predetermined criteria include a minimum length for a word or word portion to be added.

12. A terminal according to claim 10, wherein said predetermined criteria include the position of characters other than letters.

13. A method according to any of claims 9 to 12, wherein said adding step is automatically performed for any newly identified word or word portion, or for any newly identified word or word portion meeting said predetermined criteria, respectively.

14. A method according to any of claims 9 to 12, wherein said adding step is performed upon command of the user.

15. A terminal according to any of claims 10 to 12, comprising the step of discarding, upon command of the user, any newly identified word or word portion not meeting said predetermined criteria.

16. A method according to any of claims 9 to 15, wherein said vocabulary modules include vocabulary modules devoted to proper nouns, and the method further comprises establishing a link between the text composition facility and the telephone directory/address book facility also when the user accesses the text composition facility, the link establishment comprising the further steps of:
- detecting a proper noun entered into the text and for which the text disambiguating system (8a) cannot find any matching noun in said vocabulary modules devoted to proper nouns;
- looking at the address book/telephone directory (9) to check whether the noun is already included therein; and, in the negative
- informing the user of this.
